# EUROPEAN PATENT APPLICATION

(11) **EP 1 862 944 A1**
(43) Date of publication of application: **05.12.2007**
(21) Application number: 05727596.8
(22) Date of filing: 25.03.2005
(51) Int. Cl.: G06K 19/06, G06K 1/12

(54) **COLOR CODE SYMBOL, METHOD FOR CREATING COLOR CODE SYMBOL, AND STORAGE MEDIUM FOR CREATING COLOR CODE SYMBOL**

(71) Applicant: Global Value Corporation, 1-4, Shinjuku 2-chome Shinjuku-ku Tokyo 160-0022 (JP)
(72) Inventor: Owada, Hiroshi, Shinjuku-ku, Tokyo 1600022 (JP)
(74) Representative: Skone James, Robert Edmund
(86) International application number: PCT/JP2005/006409
(87) International publication number: WO 2006/103783

(57) **Abstract**

To provide a color code symbol is provided in which information can be read as it is when read by an ordinary code symbol reader and when a special readier is used, information read by the special reader can be decoded in addition to ordinary code symbol information, there is provided a color code symbol comprising a plurality of lines and/or dots and made to be read by a machine, the color code symbol **characterized by** comprising a background color which makes up a background of the code symbol, a plurality of lines and/or dots represented by a plurality of colors having the same lightness as that of and a hue different from that of the background color, and a plurality of lines and/or dots represented by a black color having a lightness different from that of the plurality of colors.

## Description

### Technical Field

The present invention relates to a color code symbol, a method for creating a color code symbol, and a storage medium for creating a color code symbol.

### Background Art

A conventional color code symbol (for example, refer to Japanese Unexamined Patent Publication No. 2001-195536) is a code symbol which can represent information several times more than a code symbol which employs two colors of white and black.

However, due to it being colored, the color code symbol could not been read by a conventional reader designed for reading information of two colors in black and white. In addition, a special code symbol reader is necessary to read a color code symbol, and it is difficult to introduce color code symbol readers to be used on the currently propagated POS terminals.

In addition, a two-dimensional code symbol is used not only to control product codes but also to transmit information. Since the two-dimensional code symbol has a large measure of information, a plurality of pieces of information are written thereon. In these situations, in recent years, increasingly, the two-dimensional code symbol has been in use as a means for transmitting personal data. Due to the wide propagation of two-dimensional code symbol readers, however, when inputting personal data, there has been occurring a case where information that should be kept secret is not written or when written, the information is written using a two-dimensional code symbol which cannot be read by a general reader.

Furthermore, in recent years, two-dimensional code symbols come to be readable by being sensed or picked up by a camera such as one on a mobile phone, and with a two-dimensional code symbol of normal standard, information written on the code symbol can easily be read. Because of this, in many cases, information on such code symbols are decoded by users. To cope with this, a code symbol has been desired in which information can be read as it is when read by an ordinary code symbol reader, and in which added special information in addition to the ordinary code symbol information can be read by the special reader when a special reader is used so that all the information an be decoded.

### Disclosure of the Invention

Then, the invention was made in view of the situations regarding the problem inherent in the aforesaid related art, and the problem that the invention is to solve is to provide a color code symbol in which information can be read as it is when read by an ordinary code symbol reader, and when a special reader is used, information which is read by the special reader can be decoded in addition to the ordinary code symbol information.

An invention of Claim 1 is characterized by a code symbol comprising a plurality of lines and/or dots and made to be read by a machine, the code symbol comprising a background color which makes up a background of the code symbol, a plurality of lines and/or dots represented by a plurality of colors having the same lightness as that of and a hue different from that of the background color, and a plurality of lines and/or dots represented by a black color having a lightness different from that of the plurality of colors.

An invention of Claim 2 is characterized, based on the invention of Claim 1, in that the code symbol is made up of a position detecting region which represents a reading direction and a reading position of the code symbol, a symbol information region which represents data storage information of the code symbol or the like and a data region which represents information in which numerical data is coded, and in that the plurality of lines and/or dots represented by the plurality of colors are used in the data region.

An invention of Claim 3 is characterized by having a calculation step of performing, based on a numerical information, a calculation regarding the creation of a code symbol and a code symbol generation step of generating, based on a result of a calculation performed in the calculation step, a background which makes up a background of a code symbol image, lines and/or dots represented by a plurality of colors having the same lightness as that of and a hue different from that of the background and black lines and/or dots having a lightness different from that of the lines and/or dots represented by the plurality of colors.

An invention of Claim 4 is characterized, based on the invention of Claim 3, in that the code symbol is made up of a position detecting region which represents a reading direction and a reading position of the code symbol, a symbol information region which represents data storage information of the code symbol or the like and a data region which represents information in which numerical data is coded, and in that the plurality of lines and/or dots represented by the plurality of colors are used only in the data region in the code symbol generation step for generation.

An invention of Claim 5 is characterized, based on the invention of Claims 3 or 4, in that the numerical information is made up of two pieces of numerical information, and in which a code symbol employing black lines and/or dots is created from one of the pieces of numerical information and thereafter, lines and dots of a plurality of colors having the same lightness as that of and a hue different from that of the background color are added to other regions of the code symbol so created than the black lines and/or dots from the other piece of numerical information for generation.

An invention of Claim 6 is characterized by storage of a computer executable program which is made up of a calculation program code for performing, based on numerical information, a calculation regarding generation of a code symbol and a code symbol generation program code for generating, based on a result of a calculation performed in the calculation step, a background which makes up a background of a code symbol image, lines and/or dots represented by a plurality of colors having the same lightness as that of and a hue different from that of the background and black lines and/or dots having lightness different from that of the lines and/or dots represented by the plurality of colors.

An invention of Claim 7 is characterized, based on the invention of Claim 6, by storage of a computer executable program in which the code symbol is made up of a position detecting region which represents a reading direction and a reading position of the code symbol, a symbol information region which represents data storage information of the code symbol or the like and a data region which represents information in which numerical data is coded, and in which the plurality of lines and/or dots represented by the plurality of colors are used only in the data region in the code symbol generation program code for generation.

An invention of Claim 8 is characterized, based on the invention of Claims 6 or 7, by storage of a computer executable program in which the numerical information is made up of two pieces of numerical information, and in which a code symbol employing black lines and/or dots is created from one of the pieces of numerical information and thereafter, lines and dots of a plurality of colors having the same lightness as that of and a hue different from that of the background color are added to other regions of the code symbol so created than the black lines and/or dots from the other piece of numerical information for generation.

According to the inventions of Claims 1, 3, 6, there is provided the code symbol comprising the plurality of lines and/or dots and made to be read by a machine, the code symbol comprising the background color which makes up the background of the code symbol, the plurality of lines and/or dots represented by the plurality of colors having the same lightness as that of and the hue different from that of the background color, and the plurality of lines and/or dots represented by the black color having the lightness different from that of the plurality of colors, when read by an ordinary code symbol reader which can read two colors of black and white, while an image to be read is read as binary information within the code symbol reader, in the case of the color code symbol, since it contains the background color and the plurality of lines and/or dots which are represented with the same lightness as that of the background color, in the reader which can read two colors of black and white, the plurality of lines and/or dots which are represented with the same lightness as that of the background color are recognized as the background, thus the background and the lines and/or dots which are represented by the black color having the lightness which is different from that of the background color are read. Because of this, in the ordinary reader which can read two colors of black and white, part of the information on the color code symbol can be read out from the information represented by the lines and/or dots which are represented by the black color, and in a reader which can read special color information, a decoding program for reading the code symbol is provided in advance therein, whereby added information, in addition to the information represented by the black color, is read from a pattern represented by the lines and/or dots having the same lightness as that of the background color by reading the code symbol by the special reader. Namely, the information can be read as it is in the normal code symbol reader, while when the special reader is used, in addition to the ordinary code symbol information, the information to be read by the special reader can be read by the special reader.

According to the inventions of Claims 2, 4, 7, the code symbol is made up of the position detecting region which represents the reading direction and the reading position of the code symbol, the symbol information region which represents data storage information of the code symbol or the like and the data region which represents information in which numerical data is coded, and the plurality of lines and/or dots represented by the plurality of colors are used in the data region, whereby the code symbol reading accuracy of the code symbol reader can be increased by attempting not to use the plurality of lines and/or dots which are represented by the plurality of colors in the basic information regions containing the information on code symbol position, direction and data storage.

According to the inventions of Claims 5, 8, the numerical information is made up of the two pieces of numerical information, and in which the code symbol employing the black lines and/or dots is created from one of the pieces of numerical information and thereafter, the lines and dots of the plurality of colors having the same lightness as that of and the hue different from that of the background color are added to the other regions of the code symbol so created than the black lines and/or dots from the other piece of numerical information for generation, whereby the information read by the ordinary code symbol reader and the information read by the special code symbol reader can be read as independent pieces of numerical information, respectively.

### Brief Description of the Drawings

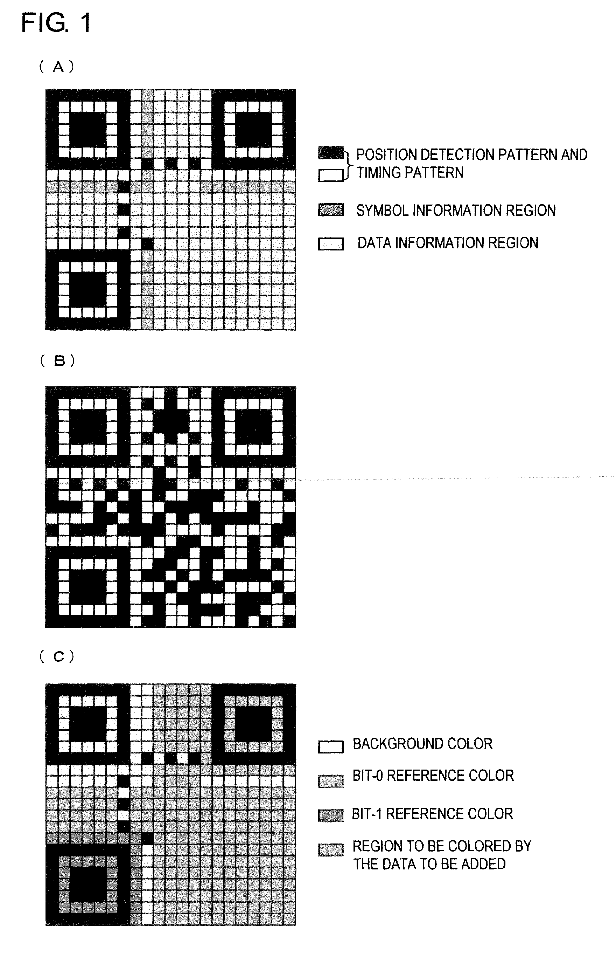

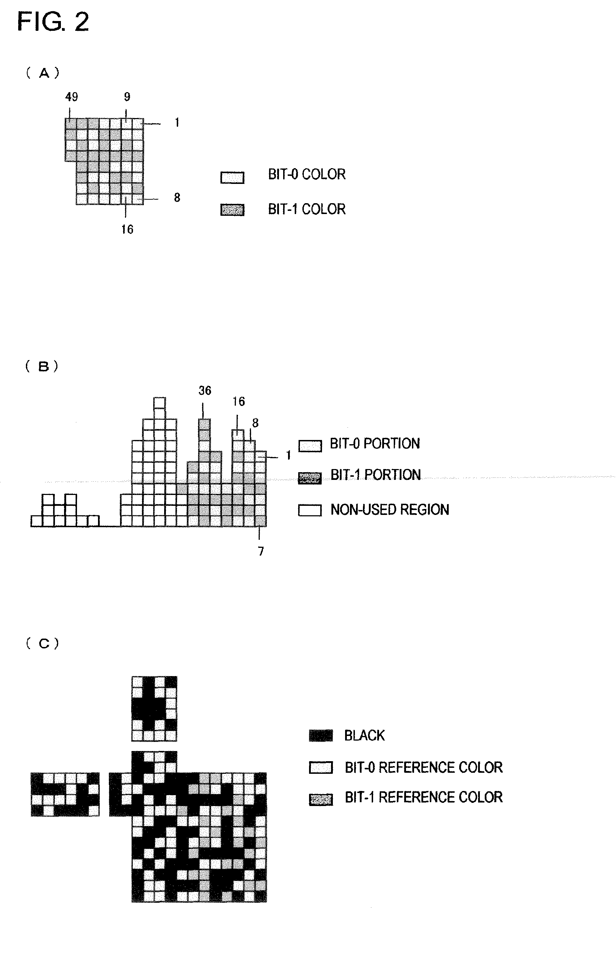

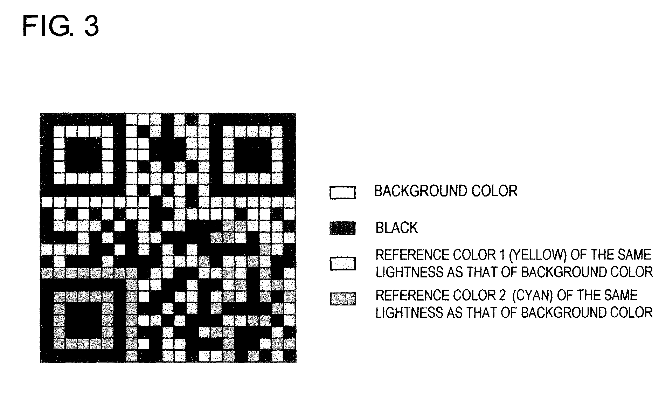

Fig. 1 is a drawing showing a flow of creating a code symbol of two colors of black and white according to an embodiment of the invention, Fig. 2 is a drawing showing a flow of adding color data to the code symbol of the two colors of black and white according to the embodiment of the invention, and Fig. 3 is a drawing showing a color code symbol according to the embodiment of the invention.

### Best Mode for Carrying out the Invention

There is provided a color code symbol comprising a plurality of lines and/or dots and made to be read by a machine, the color code symbol comprising a background color which makes up a background of the code symbol, a plurality of lines and/or dots represented by a plurality of colors having the same lightness as that of and a hue different from that of the background color, and a plurality of lines and/or dots represented by a black color having a lightness different from that of the plurality of colors, wherein the code symbol is made up of a position detecting region which represents a reading direction and a reading position of the code symbol, a symbol information region which represents data storage information of the code symbol or the like and a data region which represents information in which numerical data is coded, and the plurality of lines and/or dots represented by the plurality of colors are used in the data region.

There is provided a color code symbol generation method having a calculation step of performing, based on a numerical information, a calculation regarding the creation of a code symbol and a code symbol generation step of generating, based on a result of a calculation performed in the calculation step, a background which makes up a background of a code symbol image, lines and/or dots represented by a plurality of colors having the same lightness as that of and a hue different from that of the background and black lines and/or dots having a lightness different from that of the lines and/or dots represented by the plurality of colors, wherein the code symbol is made up of a position detecting region which represents a reading direction and a reading position of the code symbol, a symbol information region which represents data storage information of the code symbol or the like and a data region which represents information in which numerical data is coded, and the plurality of lines and/or dots represented by the plurality of colors are used only in the data region in the code symbol generation step for generation, and wherein the numerical information is made up of two pieces of numerical information, and in which a code symbol employing black lines and/or dots is created from one of the pieces of numerical information and thereafter, lines and dots of a plurality of colors having the same lightness as that of and a hue different from that of the background color are added to other regions of the code symbol so created than the black lines and/or dots from the other piece of numerical information for generation.

There is provided a storage medium for generating a color code symbol which stores a program which can executes a calculation program code for performing, based on numerical information, a calculation regarding generation of a code symbol and a code symbol generation program code for generating, based on a result of a calculation performed in the calculation step, a background which makes up a background of a code symbol image, lines and/or dots represented by a plurality of colors having the same lightness as that of and a hue different from that of the background and black lines and/or dots having lightness different from that of the lines and/or dots represented by the plurality of colors, wherein the code symbol is made up of a position detecting region which represents a reading direction and a reading position of the code symbol, a symbol information region which represents data storage information of the code symbol or the like and a data region which represents information in which numerical data is coded, and in which the plurality of lines and/or dots represented by the plurality of colors are used only in the data region in the code symbol generation program code for generation, and wherein the numerical information is made up of two pieces of numerical information, and a code symbol employing black lines and/or dots is created from one of the pieces of numerical information and thereafter, lines and dots of a plurality of colors having the same lightness as that of and a hue different from that of the background color are added to other regions of the code symbol so created than the black lines and/or dots from the other piece of numerical information for generation.

Hereinafter, an embodiment of the invention will be described by reference to the accompanying drawings.

Fig. 3 is a color code symbol, and a description thereof will be made. The code symbol of Fig. 3 is an example of a color code symbol, and in the example, a color code symbol is created to a QR code of model 2, version 1 which is a two-dimensional code symbol standard. A two-dimensional code symbol of the embodiment is formed by a set of a background and dots. In the example, colors are made up of a background color, black, a reference color 1 (yellow) having the same lightness as that of the background color, and a reference color 2 (cyan) having the same lightness of the background color. As a matter of convenience in representing it on the drawing, although they cannot be represented with their lightness matched with each other, the background color, the reference color 1 and the reference color 2 are represented with the same lightness. The background color is an outside color which represents the two-dimensional code symbol and a color represented by a bit 0.

A color for use as added information will be described. There are the following two methods as a method for adding information by making use of a plurality of hues having the same lightness to the code symbol made up of two colors of black and white. One of them is a method A in which the lightness of white portions is darkened, and a pseudo white color which lightness is the same to the darkened lightness and a different hue is used, and the other is a method B in which the lightness of black portions is brightened, and a pseudo black color which lightness is the same to the brightened lightness and a different hue is used. These two methods are equal in principle but are different as systems.

In printing, since a method is adopted in which a color is placed on a white paper, the method B is easily considered to be adopted in which white is selected as a reference. In order to read what is represented on the paper, however, light is shone on to the paper, and with no light, the result will be equal to what results when black is used. Even in the event that a certain quantity of light is shone on to the paper, since the lightness of white is easier to be varied than black depending upon the conditions of a reflecting surface and angles at which light is shone, the reference is not stable.

In the case of a display unit, a state in which no light leaks from a display screen or light emitting elements on the display screen are turned off represents black, and the method A is easily considered to be adopted. In addition, in CRT, LCD and the like which are general display units, no light emitting element exists over the whole display screen, and even in such a state that the display screen is illuminated white, black portions still remain on the display screen.

In consideration of the asymmetrical characteristic described above, in the invention, the lightness of the black portions is not changed so that the black portions remain as black, whereas the lightness of the white portions is darkened, and information is added by a plurality of hues having a lightness which is the same as the darkened lightness. When reading the symbol based on black, since a black level is stable in detecting a black region such as a positioning pattern from the screen irrespective of whether it is printed on a piece of paper or displayed on the display unit, black regions can continuously be detected. Because of this, a detecting operation such as pattern matching or the like is ensured and is performed at high speeds.

An example of correction on a liquid crystal display unit will be described. In the case of liquid crystal display, the lightness of a color varies by adjusting the brightnesses of dots illuminated R (red) , G (green) and B (blue). In one example, in a reference color 1 (cyan), the brightnesses of R, G and B are (0.00), (1.00) and (1.00), respectively. In reference color 2 (yellow), R, G and B are (1.00), (0.89) and (0.00), respectively. In a background color (grey), R, G and B are (0.87), (0.87) and (0.87), respectively. In this example, both the reference colors 1, 2 are made to keep a lightness which is 87% of the lightness of the white color. (1.00) means 100% of the brightness of a light source.

Next, an example of correction on a printing unit will be described. Let's assume that printing toners on a piece of white paper are CMYK (cyan, magenta, yellow and block). The lightness of a color is made to be determined by a ratio of areas of the four colors, and the lightness of the color varies by varying the ratio. In one example, in the reference color 1 (cyan), C, Y, M and K are (0.25), (0.00), (0.00) and (0.00), respectively. In the reference color 2 (yellow), C, Y, M and K are (0.00), (1.00), (0.00) and (0.00), respectively. In the background color, C, Y, M and K are (0.12), (0.12), (0.12) and (0.12), respectively. Both the reference colors 1, 2 are made to keep a lightness which is 88% of the lightness of the white color. (1.00) means that the ratio of areas is 100%.

By employing Fig. 1(A), regions of a color code symbol to the QR code of model 2, version 1 will be described. A color code symbol is made up of four regions, that is, made up of a position detection pattern region, a timing pattern region, a symbol information region and a data information region.

The position detection pattern region is made up of position detection pattern regions which are represented by quadrangular frames provided in three corners of four corners and represents a position and a direction of the code symbol when the code symbol is read by a code symbol reader. The timing pattern region is made up of a timing pattern region which is represented like a dotted line connecting the quadrangular frames provided in the three corners. Density information or the like of the code symbol is represented in the timing pattern region. In addition, the symbol information region is made up of symbol information regions which are lines provided on right and lower sides of the upper left quadrangular frame, a line provided on a lower side of the upper right quadrangular frame and a line provided on a right side of the lower left quadrangular frame, and in these regions, an error correction level, mask pattern reference element information and the like are represented. In addition, the data region is made up of regions other than the regions which have been described above, and mainly, a neighbor to a lower right portion of the color code symbol makes up the data information region.

Even in generating a conventional two-dimensional symbol, dots of the data information region are provided in such a manner as to prevent all bits thereof becoming 1 whereby the data information region is made to be black, and the dots are inevitably provided in such a manner that at least 40 to 50% of the dots make up the background color, which indicates that the bits thereof take 0. Dots colored in a color having the same lightness as that of the background color are represented on dots which are originally to be represented in the background color with their bits being 0, whereby added information to be added are allowed to be embedded therein in addition to general information coded on the original two-dimensional code symbol.

In addition, as is shown in Fig. 1(C), by representing dots on the position detection pattern region which are originally to be represented in the background color in the reference color 1 and the reference color 2, the reference color 1 and the reference color 2 which are represented on the position detection pattern region can be used as color samples in the data information region, and when read by a special reader, by comparing the reference color 1 and the reference color 2 of the data information region with a color sample of the position detection pattern region, it becomes possible to determine which of the colors is represented.

In an ordinary two-dimensional code symbol reader, since the background color, and the reference color 1 and the reference color 2 are identical in lightness of color, when they are binarized, they exhibit the same color or show the background color with their bits being 0. Because of this, even though the dots are represented in the reference color 1 and the reference color 2, the dots are handled in the same way as the background color with their bits being 0 and can be read without any problem. Information that is read as this occurs is general information which is represented in black. In addition, the added information can be read by reading the color code symbol by employing a special reader (a reader which can read color information).

In this embodiment, while the invention is described by employing the example of the two-dimensional code symbol, the invention can be applied to various types of code symbols such as a code symbol to JAN 13 (standard) and the like. The invention can be so applied by representing the regions which are originally to be represented in the background color by employing a plurality lines and dots which have the same lightness as that of the background color. In addition, also in the conventional code symbol, regions which indicates the aforesaid regions are provided, and by representing a color which makes up a color sample on background color portions of the region which indicates positional information, color information can be read accurately.

A method for creating a color code symbol will be described by employing Figs. 1 to 3. Information which is coded into a two-dimensional code symbol is decomposed into general information which is generally read and added information which can be read by only a dedicated reader. In this decomposition, the measure of added information is one fourth or less than the measure of general information. In case this requirement is not satisfied, a larger two-dimensional code symbol is used. In this embodiment, the information will be as follows. As a standard, a two-dimensional code symbol of black and white employs the QR code of model 2, version 1. As general information, a 34-digit number of "1234567890123456789012345678901234" is used. As added information, a 13-digit hexadecimal number of "0x123456789ABCD" is used.

Numerical information is made up of general information and added information. Original information of the general information and the added information is character information made up of kanji characters and numerical values, and the character information is converted into a numerical value.

A maximum data bit number of the QR code is defined by the standard to be 208 bits. In the case of a code symbol which is represented in a background color and black, about bits of 40 to 50% of the code become 0, and hence, about 83 bits to 104 bits become 0. In this embodiment, however, the number of bits which become 0 is made to be 52 bits which is one fourth of the maximum data bit number. In this way, in this embodiment, while the number of bits which are made to be 0 is fixed to 52 bits in the case of the added information to the QR code of model 2, version 1, it is desirable that the relevant number is about one fourth of the maximum data bit number in the case of the two-dimensional code symbol.

In addition, the code symbol based on the general information which is represented in the background color and black may be first generated, and then, by counting the number of bits which become 0 based on the general information, a measure of added information may be determined as a measure of added information which can use the number of bits so counted to a maximum extent.

Code symbol regions to the standard of the QR code of model 2, version 1 are shown in Fig. 1(A). In this figure, position detection and timing pattern are common over all the codes to this standard. This portion is used to determine a position of the code from the contents of an image read to thereby determine the number of dots of the code. An error correction level of the symbol and a mask pattern reference element are recorded in the symbol information region. This information becomes necessary to decode the data information region. The data information region is recorded after an operation such as code correction or the like is implemented on information (general information) recorded on this symbol. The symbol and the data region are recorded with white and black dots associated with binary numbers of 1, 0.

In Fig. 1(B), a two-dimensional code symbol is generated to the standard of the QR code of model 2, version 1 which is represented in a background color and black, the background color being created based on a calculation which is performed based on the 34-digit number of "1234567890123456789012345678901234" as general information, a "number" as an encoding mode and an "M" as the error correction level. The creation method hereto is the same as the normal QR code creation method.

Regions to which color information is added will be described by reference to Fig. 1(C). In the two-dimensional code symbol which is created basically by black and white, no change is made on black portions. In the two-dimensional code symbol created by black and white, white portions are, as shown in the figure, divided into four regions of a background color, a bit-0 reference color, a bit-1 reference color and a colored region by data to be added.

The background color is a color outside the two-dimensional code symbol. The bit-0 reference color and bit-1 reference color indicate reference colors which are disposed in the region to be colored by the data to be added. They are associated with binary numbers of 0, 1, respectively. These reference colors are two colors which have the same lightness as that of and a hue which is different from that of the background color. The reference color 0 and the reference color 1 can employ different colors for each added information when added information is added.

Fig. 2(A) shows only information to be added. In this embodiment, it is fixed to 52 bits. The distribution of the reference colors varies with data. As is shown by numbers, data adds colors in the reference colors bit by bit from upper bits from an end of the region.

Fig. 2(B) shows a region which results when the white portions of the colored region (from Fig. 1(C)) of Fig. 1(B) are taken out column by column. This region is a region on which the added information is placed, and the size of the region varies depending on black and white data. However, since the black and white symbol contains a correction for preventing a large loss of balance between black and white, about 40 to 50% of the region becomes white. In this embodiment, according to the standard, the colored region occupies, as a white portion, 109 bits out of 208 bits, and 52% thereof is white. The data in Fig. 2(A) is placed on this region from the end thereof as is indicated by numbers. In this figure, non-used regions are left blank for the sake of explanation.

Fig. 2 (C) shows that the data shown in Fig. 2 (B) is placed on the white portions of the colored region in Fig. 1(B) after the non-used regions in Fig. 2(B) are filled by the bit-0 reference color. This region contains the black and white information and the colored added information.

Fig. 3 shows that the position detection pattern, timing pattern, and symbol information regions are combined with the symbol pattern shown in Fig. 2(C). However, as is shown in Fig. 1(C), the resulting pattern is colored region by region. The color code symbol is generated in this way.

In a flow of generation when a two-dimensional code symbol is used for a color code symbol, when the size (standard) of a two-dimensional code symbol generated from the measure of information of general information and added information is determined, the number of bits that can be used for the added information is also determined from the size of a code symbol at the same time. Next, a calculation is performed by matching the general information with the standard of the code symbol. Next, a two-dimensional code symbol which is represented in a background color and a black color is generated according to a result of the calculation. Next, a calculation is performed based on the added information by adding information on encryption operation, generation time, order, code separation and the like. A bit array for the added information is determined from a result of the calculation, and when the bit array of the added information is sequentially placed relative to portions of data information regions of the two-dimensional code symbol which is represented in the background color and black where bits are 0, a color code symbol is generated.

When representing a color code symbol on a display unit, in the event that while lines and/or dots which are represented in a background color and a black color are caused to remain as they are, lines and/or dots which are represented by a plurality of colors which are represented with the same lightness as that of the background color are changed dynamically to be read by a special code symbol reader, it becomes possible to increase added information. As an embodiment of this, dots represented in yellow and cyan with the same lightness as that of the background color are represented relative to dots of the data information region of the two-dimensional code symbol which is generated based on the general information where bits are 0 based on information calculated based on the added information, and by changing the colors of yellow and cyan every a constant timing, the added information can be increased. By adopting a configuration like this, a color code symbol can be produced which is not easy to be copied.

Since the portion of general information of the color code symbol which is represented in the background color and black is generated according to the normal standard, the portion of general information can be read by an existing code symbol reader, but the added information which is represented in colors as the added information cannot be read without a dedicated reader unless the decoding information which was used when generating the color code symbol is made public, whereby security regarding the added information can be increased. In addition, when the color code symbol is generated by a code symbol generation apparatus and the added information is embedded therein, by generating the color code symbol with a code symbol generation time and the like added thereto, the security of the color code symbol can be increased by a difference between the time when it was generated and the time it was read which results from a comparison of those times. In addition, by incorporating a color code symbol generation time in the color code symbol as required when the color code symbol is dynamically changed, the security is made stronger.

### Industrial Applicability

Advantages of the color code symbol according to the invention will be described which result from reprinting the two-dimensional code symbol which has already been printed in black and white to color code by adding necessary information at the time (at the time of reading) to the two-dimensional code symbol.

Printed matters such as free coupons which are distributed to a large number of unidentified people cannot help identify users. A target control number (a number on free coupons) is printed conventionally on media (leaflets, magazines and the like) in the form of a two-dimensional code symbol in black and white, and a person (A) who wants to use the coupon picks up an image of the coupon by a mobile phone or a web camera and prints it if necessary. As this occurs, personal information (member's number and the like) is embedded as a color code. Since only a black portion can be read on the conventional reader, even when another person (B) picks up an image of the screen of the mobile phone or the printed matter possessed by the person (A), only the control number (the free coupon) is propagated.

At the same time as this occurs, personal information of the person (B) is embedded as a color code. Although the image possessed by (A) and the image possessed by (B) are identical to each other with respect to the black portions, but they become different with respect to the color potions. When the images are read by the conventional reader at a shop, an applicable service can be identified for implementation, and when the images are read by the color code reader, the applicable service and the personal information (members' numbers) can be obtained, this helping CRM.

In addition, as to an embodiment regarding localization of origins from which printed matters such as free coupons are returned, mails to an organization are distributed to a section and then a person involved once they arrive at the organization (a building or a representative address). Address information (a building or a representative address) is included in the black code, and the black code is read by the general reader at a forwarder, so that the forwarder sends the relevant mail to the address. The section and person involved and the like are embedded in the color code, and the organization who receive the mail reads the color code, so that the relevant mail is sent to the person involved.

As to an embodiment regarding the protection of privacy, there are cases where a detailed address, a room number of a flat or hotel (a post-office box number of a post-office box) and the like should not be known to a sender. Information to a depot of a forwarder is inputted into the black code, and a detailed address from the depot is inputted into the color code. In this case, since the color code read cannot be converted into the address without a key (an electronic key) of the depot, the detailed information can be protected from the sender and a delivery person (to the depot). The forwarder distributes color two-dimensional code symbol in the form of a sticker or the like to users who wish to enjoy such service. The users hand over the stickers to a delivery party, asking them to affix the stickers to mails to the attention of users. The delivery party can grasp the address to the depot but cannot know a further address.

Furthermore, as to an example in which security is protected by changing the added information dynamically, there is an example in which the black and white two-dimensional code symbol is displayed on a display unit of a mobile phone for authentication of an individual. In this example, since information is fixed when the information is displayed by the black and white two-dimensional code symbol only, whether or not the information is such as to be copied cannot be determined. However, in this color code, since the color portion can be updated irrespective of the black and white portion, by adding a display time to the colored portion for display every a constant time, the copy of the information can be detected by a deviation in time.

In addition, in this color code symbol, since the original two-dimensional code is affected in no way even though secret information is added, a new service can be started without changing the conventional heavy system at all. As an example of this, in a conventional code system of products, one code is allocated to one product, and the product control and stock control systems are built on this premise. In the invention, products can be controlled individually without changing the aforesaid systems at all. This is because when a production number is printed in color on the black and white product code, an individual purchase control can be implemented by holding a product to a code reader which can deal with color codes without affecting at all the systems which are controlled by the conventional black and white two-dimensional code symbol.

In many convenient examples where codes containing two types of information are used, by changing from a black and white two-dimensional code installed on a product catalogue to the color two-dimensional code of the invention, product catalogue data can be installed in the black and white two-dimensional code symbol, while information such as magazine issue number where the product catalogue data is installed and an installation starting time and the like which have no relation with the product can be installed in the color portion. In the example in which the black and white two-dimensional code symbol is displayed on the display unit of a mobile phone for individual authentication, with the related art, information is displayed in the black and white two-dimensional code symbol, the contents of the data are read quickly to be copied. However, with the color code, since the information on the color portion cannot be read by the ordinary reader, the information cannot be copied.

In addition, since the invention is advantageous in that the black and white two-dimensional code symbol that has already been printed can be reprinted in the color code symbol after necessary information at the time (at the time of reading) is added thereto, information on production and manufacturing of a product is recorded on the black and white two-dimensional code symbol printed on the product. Since management information for sales of this product depends on a method of sales, the management information is not contained in the black and white two-dimensional code symbol. With the color code symbol of the present invention, the black and white two-dimensional code symbol printed on a product is read at a shop where the product is sold when the product is purchased by the shop, and by affixing a color code symbol wherein information such as control information (delivery date, expiry data, where the product was purchased) and the like is added in color to the black and white two-dimensional code symbol, whereby the conventional product information can be read by a customer, and in the sale system, by reading the color code symbol, the sale management information, date after delivery, product expiry date management and the like can be automatically controlled.

## Claims

1. A color code symbol comprising a plurality of lines and/or dots and made to be read by a machine, the code symbol **characterized by** comprising a background color which makes up a background of the code symbol, a plurality of lines and/or dots represented by a plurality of colors having the same lightness as that of and a hue different from that of the background color, and a plurality of lines and/or dots represented by a black color having a lightness different from that of the plurality of colors.

2. A color code symbol as set forth in Claim 1, **characterized in that** the code symbol comprises a position detecting region which represents a reading direction and a reading position of the code symbol, a symbol information region which represents data storage information of the code symbol or the like and a data region which represents information in which numerical data is coded, and **in that** the plurality of lines and/or dots represented by the plurality of colors are used in the data region.

3. A method for creating a color code symbol **characterized by** having a calculation step of performing, based on a numerical information, a calculation regarding the creation of a code symbol and a code symbol generation step of generating, based on a result of a calculation performed in the calculation step, a background of a code symbol image, lines and/or dots represented by a plurality of colors having the same lightness as that of and a hue different from that of the background and black lines and/or dots having a lightness different from that of the lines and/or dots represented by the plurality of colors.

4. A method for creating a color code symbol as set forth in Claim 3, **characterized in that** the code symbol comprises a position detecting region which represents a reading direction and a reading position of the code symbol, a symbol information region which represents data storage information of the code symbol or the like and a data region which represents information in which numerical data is coded, and **in that** the plurality of lines and/or dots represented by the plurality of colors are used only in the data region in the code symbol generation step for generation.

5. A method for creating a color code symbol as set forth in Claims 3 or 4, **characterized in that** the numerical information comprises two pieces of numerical information, and **in that** a code symbol employing black lines and/or dots is created from one of the pieces of numerical information and thereafter, lines and dots of a plurality of colors having the same lightness as that of and a hue different from that of the background color are added to other regions of the code symbol so created than the black lines and/or dots from the other piece of numerical information for generation.

6. A storage medium **characterized by** storing a computer executable program which comprises a calculation program code for performing, based on numerical information, a calculation regarding generation of a code symbol and a code symbol generation program code for generating, based on a result of a calculation performed in the calculation step, a background of a code symbol image, lines and/or dots represented by a plurality of colors having the same color and lightness as that of and a hue different from that of the background and black lines and/or dots having lightness different from that of the lines and/or dots represented by the plurality of colors.

7. A storage medium as set forth in Claim 6, **characterized by** storing a computer executable program which is **characterized in that** the code symbol comprises a position detecting region which represents a reading direction and a reading position of the code symbol, a symbol information region which represents data storage information of the code symbol or the like and a data region which represents information in which numerical data is coded, and **in that** the plurality of lines and/or dots represented by the plurality of colors are used only in the data region in the code symbol generation program code for generation.

8. A storage medium as set forth in Claims 6 or 7, **characterized by** storing a computer executable program which is **characterized in that** the numerical information comprises two pieces of numerical information, and **in that** a code symbol employing black lines and/or dots is created from one of the pieces of numerical information and thereafter, lines and dots of a plurality of colors having the same lightness as that of and a hue different from that of the background color are added to other regions of the code symbol so created than the black lines and/or dots from the other piece of numerical information for generation.
